# EUROPÄISCHE PATENTSCHRIFT

(11) **EP 0 836 679 B1**
(45) Veröffentlichungstag und Bekanntmachung des Hinweises auf die Patenterteilung: **02.06.1999**
(21) Anmeldenummer: 96922823.8
(22) Anmeldetag: 18.06.1996
(51) Int. Cl.: F16B 37/04

(54) **U-FÖRMIGE AUFKLIPSGLEITMUTTER**
U-SHAPED CLIP-ON SLIDE NUT
ECROU-COULISSEAU CLIPSABLE EN U

(30) Priorität: 06.07.1995 DE 19524648
(43) Veröffentlichungstag der Anmeldung: 22.04.1998
(73) Patentinhaber: Rittal-Werk Rudolf Loh GmbH & Co. KG, 35745 Herborn (DE)
(72) Erfinder: HARTEL, Marc, D-35447 Reiskirchen (DE)
(74) Vertreter: Fleck, Hermann-Josef, Dr.-Ing.
(86) Internationale Anmeldenummer: EP9602617
(87) Internationale Veröffentlichungsnummer: WO9702434

(56) Entgegenhaltungen:
- DE-U- 8 809 756
- US-A- 2 346 200
- US-A- 4 728 235

## Beschreibung

Die Erfindung betrifft eine U-förmige Aufklipsgleitmutter, die zwei parallele, mit Rastelementen versehene Gleitschenkel aufweist und auf einem hinterschnittenen Steg aufrastbar ist, wobei der eine Gleitschenkel eine Bohrung und der andere Gleitschenkel eine mit der Bohrung fluchtende Gewindebohrung für eine Klemmschraube aufweist.

Aufklipsgleitmuttern dieser Art sind aus der US-A-2 346 200 bekannt und werden für die unterschiedlichsten Anwendungen eingesetzt. Dabei kann die Befestigungsschraube dazu genutzt werden, die Aufklipsgleitmutter axial an dem Steg zu positionieren. Außerdem kann, wie der DE-C-35 24 400 zu entnehmen ist, mit der Befestigungsschraube ein zusätzliches Bauteil, z.B. eine Frontplatte, an dem mit dem Steg versehenen Bauteil, z.B. einer Verbindungsleiste, festgelegt werden. Die Frontplatte hat dazu ein mit der Bohrung und der Gewindebohrung in den Gleitschenkeln fluchtende Befestigungsbohrung. Diese doppelte Funktion der Befestigungsschraube erschwert die Montage beachtlich, da neben dem Positionieren der Aufklipsgleitmutter auf dem Steg gleichzeitig das Ausrichten der Frontplatte zur Aufklipsgleitmutter durchgeführt werden muß. Dies ist aber von einer Person ohne Hilfsmittel praktisch nicht durchführbar.

Eine weitere Aufklipsgleitmutter dieser Art ist in der DE-B-25 43 021 beschrieben.

Es ist Aufgabe der Erfindung, eine Aufklipsgleitmutter der eingangs erwähnten Art zu schaffen, bei der die Positionierung am Steg und das Anbringen eines zusätzlichen Bauteiles an der Aufklipsgleitmutter von einer Person ohne Hilfsmittel auf einfache Weise ausführbar sind.

Diese Aufgabe wird nach der Erfindung dadurch gelöst, daß die Bohrung als Senklochbohrung für eine als Senkkopfschraube ausgebildete Klemmschraube ausgebildet ist, und daß zumindest ein Gleitschenkel zusätzlich mit einer Schraubaufnahme für ein Befestigungsschraube versehen ist.

Die Aufklipsmutter kann auf den Steg aufgeklipst und am Steg positioniert werden. Danach kann mit der zusätzlichen Befestigungsschraube das zusätzliche Bauteil an der Aufklipsgleitmutter befestigt werden. Die Senkkopfschraube beeinträchtigt die Anbringung des zusätzlichen Bauteiles nicht. Die Schraubaufnahme kann dabei in den Gleitschenkeln außerhalb der Senklochbohrung bzw. der Gewindebohrung für die Klemmschraube, jedoch innerhalb oder außerhalb des den Steg aufnehmenden Bereiches der Gleitschenkel eingebracht sein.

Die Ausgestaltung kann dabei so sein, daß die Schraubaufnahme als Bohrung für eine selbstschneidende Befestigungsschraube ausgebildet ist, oder daß die Schraubaufnahme als Gewindebohrung für die Befestigungsschraube ausgebildet ist.

Eine verbesserte Festlegung der Aufklipsmutter auf dem Steg ergibt sich nach einer weiteren Ausgestaltung dadurch, daß der nicht mit der Schraubaufnahme versehene Gleitschenkel mit einer mit der Schraubaufnahme fluchtenden Bohrung für die Befestigungsschraube versehen ist.

Eine einfach und kostengünstig herstellbare Aufklipsmutter ist dadurch gekennzeichnet, daß sie aus einem Stanz-Biege-Teil gebildet ist bei dem die freien Enden der Gleitschenkel gegeneinander eingebogenen, als Rastelemente dienende Endabschnitte aufweisen.

Die Erfindung wird anhand eines in den Zeichnungen dargestellten Ausführungsbeispieles näher erläutert. Es zeigen:
- Fig. 1: in perspektivischer Ansicht eine U-förmige Aufklipsgleitmutter,
- Fig.2: einen Schnitt durch die zusätzliche Schraubaufnahme für die Befestigungsschraube,
- Fig.3: einen Schnitt durch die Senklochbohrung und die Gewindebohrung für die Klemmschraube und
- Fig. 4: in perspektivischer Ansicht die Anbringung eines plattenförmigen Bauteils an einem mit hinterschnittenem Steg versehenen Profilabschnittes mittels einer Aufklipsgleitmutter nach Fig. 1 bis 3.

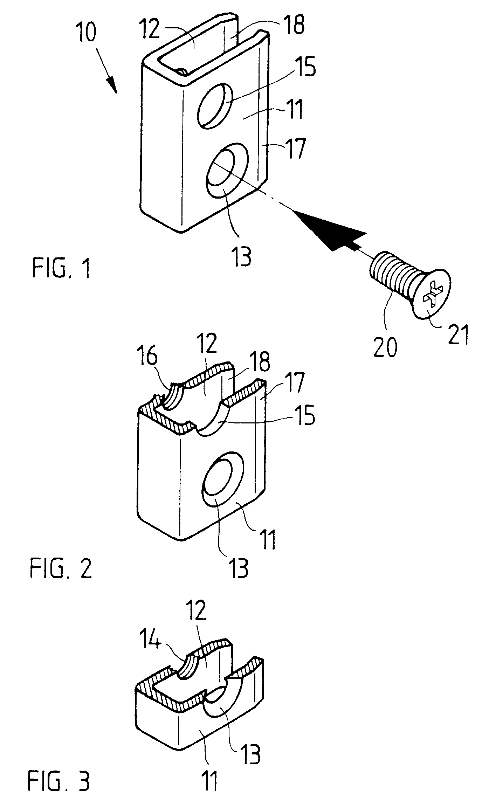

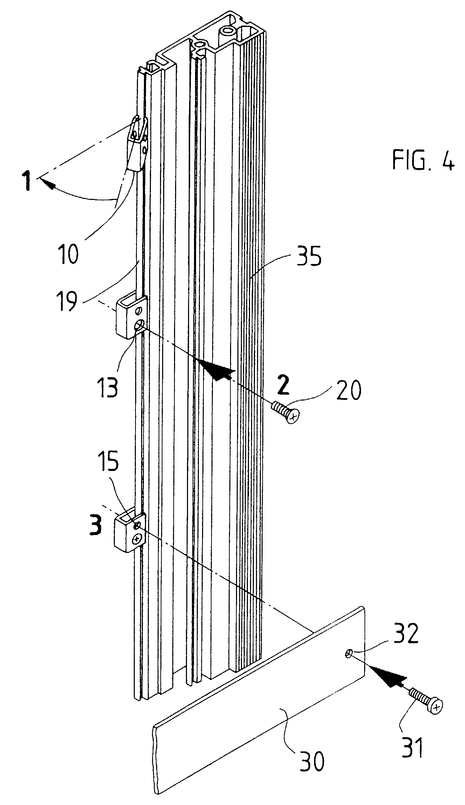

Die in Fig. 1 in perspektivischer Ansicht dargestellte Aufklipsgleitmutter ist mit einheitlicher Wandstärke ausgebildet und kann daher auf einfache und kostengünstige Weise als Stanz-Biege-Teil 10 hergestellt werden. Die U-förmige Aufklipsgleitmutter hat zwei parallele und beabstandete Gleitschenkel 11 und 12, welche an den freien Enden gegeneinander eingebogene Endabschnitte 17 und 18 aufweisen. Diese Endabschnitte 17 und 18 und der Abstand der Gleitschenkel 11 und 12 sind so auf den hinterschnittenen Steg 19 eines Profilabschnittes 35 abgestimmt, daß die Aufklipsgleitmutter auf den Steg 19 aufgerastet werden kann, wie mit der Bezugsziffer 1 in Fig. 4 gezeigt ist.

Die Gleitschenkel 11 und 12 nehmen eine Klemmschraube auf. Dabei ist der der Montageseite zugekehrte Gleitschenkel 11 mit einer Senklochbohrung 13 für die als Senkkopfschraube 20 ausgebildete Klemmschraube versehen, während der andere Gleitschenkel 12 mit einer fluchtenden Gewindebohrung 14 versehen ist, wie insbesondere dem Schnitt nach Fig. 3 zu entnehmen ist. Die Senklochbohrung 13 nimmt den Kopf 21 der Senkkopfschraube 20 bündig auf. Die Senklochbohrung 13 und die Gewindebohrung 14 sind in Bereichen der Gleitschenkel 11 und 12 eingebracht, die außerhalb des Steges 19 liegen, wenn die Aufklipsgleitmutter auf den Steg 19 aufgerastet ist. Mit der Senkkopfschraube 20 kann die aufgerastete Aufklipsgleitmutter auf dem Steg 19 positioniert werden. Dazu wird die Aufklipsgleitmutter auf dem Steg 19 in die gewünschte Position verschoben und mit der Klemmschraube am Steg 19 verspannt, wie mit der Bezugsziffer 2 in Fig. 4.

Die Senkkopfschraube 20 wird in die Senklochbohrung 13 eingeführt und am Steg 19 vorbei in die Gewindebohrung 14 eingeschraubt. Dabei werden die Gleitschenkel 11 und 12 gegeneinander gezogen und am Steg 19 verspannt. Die Aufklipsgleitmutter ist damit axial unverschiebbar am Steg 19 festgelegt.

Auf der Montageseite der Aufklipsgleitmutter wird mit einer Befestigungsschraube 31 z.B. ein plattenförmiges Bauteil 30 angebracht, wie mit der Bezugsziffer 3 in Fig. 4 gezeigt ist. Dabei wird die Befestigungsschraube 31 durch eine Bohrung 32 des Bauteils 30 und die Bohrung 15 im Gleitschenkel 11 geführt und in die Gewindebohrung 16 des Gleitschenkels 12 eingeschraubt. Die Befestigungsschraube 31 dient dabei als zusätzliche Klemmschraube, da sie ebenfalls am Steg 19 vorbeigeführt ist. Die Befestigungsschraube 31 kann aber auch direkt in eine Schraubaufnahme im Gleitschenkel 11 eingeschraubt werden, wobei diese Schraubaufnahme auch im Bereich des aufgenommenen Steges 19 angeordnet sein kann. Diese Schraubaufnahme kann als Gewindebohrung für eine mit entsprechendem Gewinde versehene Befestigungsschraube 31 oder als Bohrung für eine selbstschneidende Befestigungsschraube ausgebildet sein.

Die Positionierung der Aufklipsgleitmutter kann vor dem Anbringen des Bauteils 30 erfolgen, was die Montage wesentlich vereinfacht, wie die mit den Bezugsziffern 1 bis 3 gezeigten Montageschritte erkennen lassen.

Es können auch beide Gleitschenkel 11 und 12 mit einer Schraubaufnahme versehen sein, so daß beide Außenseiten der Gleitschenkel 11 und 12 als Befestigungsflächen verwendet werden können.

## Patentansprüche

1. U-förmige Aufklipsgleitmutter (10), die zwei parallele, mit Rastelementen (17, 18) versehene Gleitschenkel (11, 12) aufweist und auf einem hinterschnittenen Steg (19) aufrastbar ist, wobei der eine Gleitschenkel (11) eine Bohrung (13) und der andere Gleitschenkel (12) eine mit der Bohrung fluchtende Gewindebohrung (14) für eine Klemmschraube (20) aufweist,
dadurch gekennzeichnet,
daß die Bohrung als Senklochbohrung (13) für eine als Senkkopfschraube (20) ausgebildete Klemmschraube (20) ausgebildet ist, und
daß zumindest eine Gleitschenkel (12) zusätzlich mit einer Schraubaufnahme (16) für eine Befestigungsschraube (31) versehen ist.

2. U-förmige Aufklipsgleitmutter nach Anspruch 1,
dadurch gekennzeichnet,
daß die Schraubaufnahme (16) als Bohrung für eine selbstschneidende Befestigungsschraube (31) ausgebildet ist.

3. U-förmige Aufklipsgleitmutter nach Anspruch 1,
dadurch gekennzeichnet,
daß die Schraubaufnahme (16) als Gewindebohrung für die Befestigungsschraube (31) ausgebildet ist.

4. U-förmige Aufklipsgleitmutter nach einem der Ansprüche 1 bis 3,
dadurch gekennzeichnet,
daß die Schraubaufnahme (16) außerhalb der Senklochbohrung (13) bzw. Gewindebohrung (14) und außerhalb des den Steg (19) aufnehmenden Bereiches der Gleitschenkel (11,12) eingebracht ist.

5. U-förmige Aufklipsgleitmutter nach einem der Ansprüche 1 bis 4,
dadurch gekennzeichnet,
daß der nicht mit der Schraubaufnahme (16) versehene Gleitschenkel (11) mit einer mit der Schraubaufnahme (16) fluchtenden Bohrung (15) für die Befestigungsschraube (31) versehen ist.

6. U-förmige Aufklipsgleitmutter nach einem der Ansprüche 1 bis 5,
dadurch gekennzeichnet,
daß sie aus einem Stanz-Biege-Teil (10) gebildet ist, bei dem die freien Enden der Gleitschenkel (11,12) gegeneinander eingebogene, als Rastelemente dienende Endabschnitte (17,18) aufweisen.

## Claims

1. U-shaped clip-on sliding nut (10), which includes two parallel slide members (11, 12) provided with locking elements (17, 18) and is locatable onto an undercut web (19), one slide member (11) including a bore (13), and the other slide member (12) including a threaded bore (14), which is in alignment with the bore, for a clamping screw (20), characterised in that the bore is configured as a sinkhole bore (13) for a clamping screw (20) configured as a countersunk screw (20), and in that at least one slide member (12) is additionally provided with a screw receiver (16) for receiving a securing screw (31).

2. U-shaped clip-on sliding nut according to claim 1, characterised in that the screw receiver (16) is configured as a bore for a self-tapping securing screw (31).

3. U-shaped clip-on sliding nut according to claim 1, characterised in that the screw receiver (16) is configured as a threaded bore for the securing screw (31).

4. U-shaped clip-on sliding nut according to one of claims 1 to 3, characterised in that the screw receiver (16) is introduced externally of the sinkhole bore (13), or threaded bore (14) respectively, and externally of the region of the slide members (11, 12) accommodating the web (19).

5. U-shaped clip-on sliding nut according to one of claims 1 to 4, characterised in that the slide member (11), which is not provided with the screw receiver (16), is provided with a bore (15), which is in alignment with the screw receiver (16), for the securing screw (31).

6. U-shaped clip-on sliding nut according to one of claims 1 to 5, characterised in that it is formed from a stamped and bent component part (10), wherein the free ends of the slide members (11, 12) include end portions (17, 18), which are bent inwardly towards one another and serve as locking elements.

## Revendications

1. Ecrou-coulisseau clipsable en forme de U (10), qui présente des deux ailes de glissement (17, 18) parallèles dotées d'éléments d'encliquetage (17, 18), qui peut être encliqueté sur une nervure (19) en dépouille, où une aile de glissement (11) présente une forure (13) et où l'autre aile de glissement (12) présente une forure filetée (14) en alignement avec ladite première forure pour un boulon ou une vis de serrage (20),
caractérisé
en ce que la forure (13) est conçue pour recevoir une vis de serrage (20) à tête noyée ou fraisée (21), et
en ce qu'au moins une aile de glissement (12) est dotée en outre d'un logement de réception (16) pour une vis de fixation (31).

2. Ecrou-coulisseau clipsable en forme de U suivant la revendication 1,
caractérisé
en ce que le logement de réception pour vis (6) est conçu pour une vis à auto-taraudage (31).

3. Ecrou-coulisseau clipsable en forme de U suivant la revendication 1,
caractérisé
en ce que le logement de réception pour vis (6) est conçu sous forme de forure filetée pour la vis de fixation (31).

4. Ecrou-coulisseau clipsable en forme de U suivant l'une quelconque des revendications de 1 à 3,
caractérisé
en ce que le logement pour vis (6) est pratiqué en dehors de la forure à tête noyée (13) ou de la forure filetée (14) et en dehors de la zone des ailes de glissement (11, 12) qui reçoit la nervure (19).

5. Ecrou-coulisseau clipsable en forme de U suivant l'une quelconque des revendications de 1 à 4,
caractérisé
en ce que l'aile de glissement (11) qui n'est pas pourvue du logement pour vis (16) présente une forure (15) en alignement avec le logement pour vis (16) et destinée à recevoir la vis de fixation (31).

6. Ecrou-coulisseau clipsable en forme de U suivant l'une quelconque des revendications de 1 à 5,
caractérisé
en ce qu'il est constituée par une pièce estampée et cintrée (10) où les extrémités libres des ailes de glissement (11, 12) présentent des tronçons terminaux (17, 18) cintrés l'un en direction de l'autre servant d'éléments d'encliquetage.
